# EUROPEAN PATENT APPLICATION

(11) **EP 2 112 494 A1**
(43) Date of publication of application: **28.10.2009**
(21) Application number: 07767549.4
(22) Date of filing: 26.06.2007
(51) Int. Cl.: G01M 15/02, E02F 9/26, F02D 29/00, F02D 45/00

(54) **MACHINE BODY DIAGNOSING METHOD, AND MACHINE BODY DIAGNOSING SYSTEM**

(30) Priority: 14.02.2007 JP 2007034034
(71) Applicant: Caterpillar Japan Ltd., Setagaya-ku Tokyo (JP)
(72) Inventor: YAMADA, Hideo, Tokyo 158-8530 (JP); SAKAI, Makoto, Tokyo 158-8530 (JP); MATSUFUJI, Kazumoto, Tokyo 158-8530 (JP); TANAKA, Jun, Tokyo 158-8530 (JP)
(74) Representative: Ablett, Graham Keith
(86) International application number: PCT/JP2007/062743
(87) International publication number: WO 2008/099519

(57) **Abstract**

A machine diagnosing system is provided which is capable of making an abnormality/failure diagnosis of a machine without using threshold values. The machine diagnosing system is composed of a dynamic state management controller 24 that creates frequency distribution information showing a relationship between signal intensity related to engine output and occurrence frequency whenever the machine body 11 is operated for a predetermined time, a management section 15 that receives and stores pieces of frequency distribution information, and terminal equipment 17 and 19 each of which detects a decrease in engine output by arranging the pieces of frequency distribution information obtained from the management section 15 in time series and by comparing these pieces of information with each other. A decrease in engine output can be detected, without using threshold values, by comparison between the pieces of frequency distribution information stored concerning the output of the engine, unlike a case in which the abnormality/failure of the machine is determined by comparison with a conventional threshold value or in which the degree of such abnormality is ranked by comparison there.

## Description

### TECHNICAL FIELD

The present invention relates to a method and a system for diagnosing a machine by use of a dynamic state management controller having an operating data storage function and a radio communication function.

### BACKGROUND ART

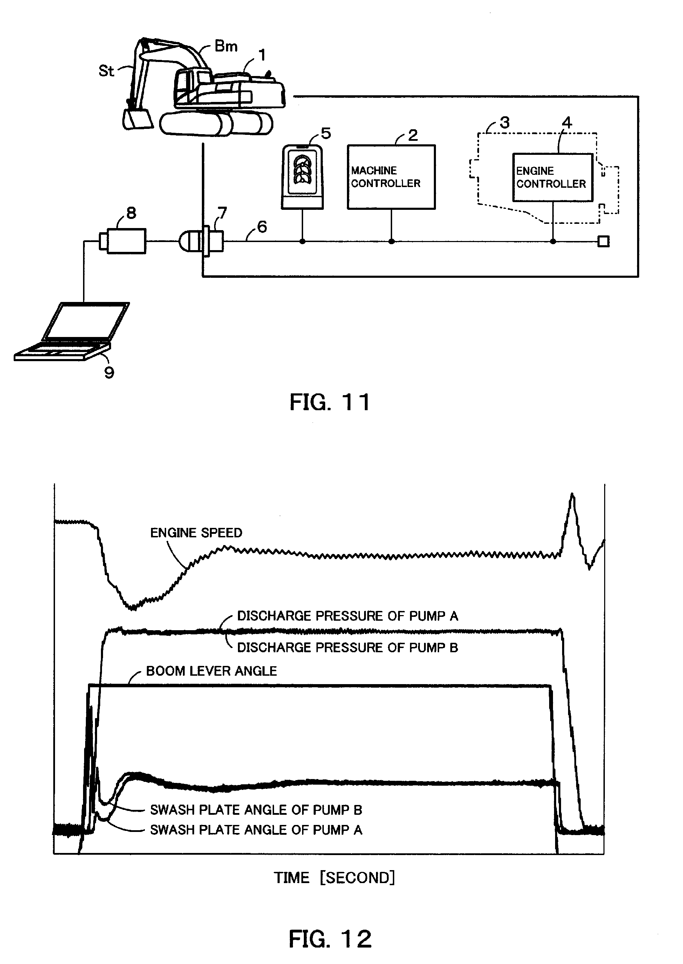

As shown in Fig. 11, a machine 1, such as a hydraulic shovel, includes a machine controller 2 that controls the operation of the machine 1, an engine controller 4 that controls the fuel injection of an engine 3 mounted on the machine 1, and a monitor 5 that is an output device used also as an input device operated by an operator working in a cab of the machine 1. The machine controller 2, the engine controller 4, and the monitor 5 are connected together by a data link line 6. An end of the data link line 6 is connected to a vehicle-side connector 7 used for service tools.

To determine whether the performance (chiefly, engine output) of the machine 1 is proper or not, the following process has been conventionally and generally performed. A serviceperson comes to a site where the machine 1 is placed, and then connects a measuring device or a laptop computer 9 to the vehicle-side connector 7 of the machine 1 via a communication adapter 8. Thereafter, the serviceperson performs a special operation, such as a two-pump relief operation, and measures and records a change in oil-pressure output or in engine speed during the two-pump relief operation, thereby checking whether thus obtained measurement value falls within the range of predetermined values.

The term "two-pump relief operation" denotes that the discharge pressure of each of two main pumps mounted on the machine 1 is adjusted to reach a relief pressure under which the engine 3 undergoes the maximum load. Specifically, operating levers, such as a boom Bm and a stick St, of a work machine are operated in the direction of a limit in a state in which these operating levers are in contact with a movable limit position. That is, oil pressure is relieved through a relief valve of an oil-pressure source in a state in which the work machine is never moved because the operating levers are operated in the direction of the limit.

Fig. 12 shows an example of the measurement result obtained by the two-pump relief operation. The boom Bm is brought into contact with the movable limit position, and, in this state, a boom lever used to operate a boom cylinder is fully operated at a rush so as to impose a sudden load on an engine 3. At this time, the performance of the engine 3 is evaluated while detecting a change in the engine speed or a change in the swash plate control state (e.g., pump swash plate angle or pump discharge pressure) of the two main pumps.

Power shift control is used in this kind of pump swash plate control. That is, a power shift pressure corresponding to the engine speed and to the pump discharge pressure detected above is calculated by a machine controller, an electromagnetic proportional pressure-reducing valve of a power shift control means is then controlled by a control signal resulting from the calculation, the pilot pressure, i.e., the power shift pressure controllably reduced by the electromagnetic proportional pressure-reducing valve is then guided to a regulator control valve, and the pump swash plate is controlled by the regulator so as to controllably shift pump discharge pressure-discharge rate characteristics to an optimal one. That is, in the pump discharge pressure-discharge rate characteristic diagram, the pump power is controllably shifted from a constant pump power curve to another constant pump power curve (see Patent Document 1, for example).

Alternatively, a work machine is provided with a detection section that detects an operational state of the machine, a data management section that determines whether the machine is in a normal or abnormal state from a detection result obtained by the detection section and that stores the determination result and the detection result, and a first communication section that communicates with a user device. The user device is provided with a second communication section that communicates with the work machine and a master device and a storage section that stores data transmitted from the data management section of the work machine. The master device is provided with a third communication section that communicates with the user device and an abnormality/failure diagnosis section that makes an abnormality and/or failure diagnosis of the work machine based on data obtained above. The data management section includes a normal/abnormal determination section that determines whether the machine is in a normal or abnormal state based on a detection result of each sensor (for example, the machine is regarded as abnormal when the engine speed exceeds a predetermined engine speed or when the discharge pressure of an oil pressure pump exceeds a predetermined pressure). Specifically, the data management section has a table including each reference value (threshold value) for each item, such as the pump discharge pressure, the engine speed of the work machine, or the temperature of hydraulic oil, so as to determine whether repair is needed or not. With reference to each set value of this table, a determination that repairs to an abnormal or failed element are needed is made concerning an item in which a threshold value is exceeded (see Patent Document 2, for example).

In addition, an abnormal degree is determined from ranks in which the absolute value of a sensor detection value is divided step by step with a plurality of threshold values, or is determined from ranks in which a difference (i.e., inclination of trend data) in a sensor detection value between a period of time preceding a unit time and a period of time succeeding the unit time is divided step by step with a plurality of threshold values, or is determined from ranks in which the frequency of occurrence of an error code per unit time is divided step by step with a plurality of threshold values (see Patent Document 3, for example).
Patent Document 1: Japanese Patent No. 3697136 (see page 7, Figs. 1 and 7)
Patent Document 2: Japanese Laid-open Patent Publication No. 11-24744 (see pages 1 and 13, Figs. 2 to 4)
Patent Document 3: Japanese Laid-open Patent Publication No. 2002-180502 (see pages 11 to 12, Figs. 2 to 5)

### DISCLOSURE OF THE INVENTION

### PROBLEMS TO BE SOLVED BY THE INVENTION

To make a failure diagnosis with the measurement of machine performance in a conventional manner as shown in Fig. 11 and Fig. 12, it is strictly necessary to go to a site in which the machine is placed and to measure such machine performance there. Therefore, disadvantageously, much time and effort are required, and it is difficult to make a periodic diagnosis, because operating time and the like are not known until a repair worker visits the site.

In contrast with this, the methods mentioned in Patent Documents 2 and 3 enable a serviceperson to make an abnormality/failure diagnosis of a machine at a remote place without visiting a site in which the machine is placed. However, in these methods, data obtained by actual measurement is compared with a reference value, i.e., a threshold value. As a result, in an item in which this threshold value is exceeded, a determination that the abnormality and/or failure of the machine must be repaired is made, or an abnormal degree is determined from ranks classified by setting a plurality of threshold values. Therefore, if the threshold value is not fixed, the machine cannot be diagnosed as being abnormal and/or as being failed.

The present invention has been made in consideration of these circumstances. It is therefore an object of the present invention to provide a machine diagnosing method and a machine diagnosing system capable of, without using threshold values, diagnosing a machine as being abnormal and/or as being failed.

### Means for Solving the Problems

According to claim 1 of the present invention, a machine diagnosing method includes a step of allowing a dynamic state management controller, which is mounted on a machine and which has an operating data storage function and a radio communication function, to create frequency distribution information showing a relationship between intensity of a signal related to engine output of the machine and occurrence frequency whenever the machine is operated for a predetermined time; a step of allowing a management section to store pieces of frequency distribution information transmitted by means of the radio communication function of the dynamic state management controller; and a step of detecting a decrease in engine output by arranging the pieces of frequency distribution information in time series and by comparing these pieces of frequency distribution information with each other.

According to claim 2 of the present invention, the machine diagnosing method is **characterized in that,** in claim 1, the signal related to engine output is a power shift pressure that acts on a regulator controlling a pump driven by the engine and that controls an output of the pump.

According to claim 3 of the present invention, the machine diagnosing method is **characterized in that,** in claim 1, the signal related to engine output is a boost pressure supercharged to an engine intake side by a turbo charger.

According to claim 4 of the present invention, the machine diagnosing method is **characterized in that,** in claim 1, the signal related to engine output is an engine speed.

According to claim 5 of the present invention, the machine diagnosing method is **characterized in that,** in any one of claim 1 through claim 4, a determination is made as to whether an amount of change caused when the output of the engine is reduced falls within a given range, and, if the amount of change falls within the given range, a determination is made that a decrease in engine output has been caused by inferior fuel, whereas, if the amount of change does not fall within the given range, a determination is made that a decrease in engine output has been caused by engine failure.

According to claim 6 of the present invention, a machine diagnosing system includes a dynamic state management controller that is mounted on a machine and that has an operating data storage function and a radio communication function, the operating data storage function according to which frequency distribution information that shows a relationship between signal intensity related to an output of an engine of the machine and occurrence frequency is created whenever the machine is operated for a predetermined time; a management section that receives and stores pieces of frequency distribution information transmitted by the radio communication function of the dynamic state management controller; and terminal equipment each of which detects a decrease in engine output by arranging the pieces of frequency distribution information obtained from the management section through a telecommunication line in time series and by comparing these pieces of frequency distribution information with each other.

### EFFECTS OF THE INVENTION

According to claim 1 of the present invention, the dynamic state management controller is allowed to create frequency distribution information concerning a signal related to engine output whenever the machine is operated for a predetermined time, and the management section is allowed to store pieces of frequency distribution information transmitted thereto, and a decrease in engine output is detected by arranging the pieces of frequency distribution information in time series and by comparing these pieces of frequency distribution information with each other. Therefore, a machine diagnosing method can be provided which is capable of detecting a decrease in engine output, without using threshold values, by comparison between the pieces of frequency distribution information stored concerning the output of the engine, unlike a case in which the abnormality/failure of the machine is determined by comparison with a conventional threshold value or in which the degree of such abnormality is ranked by comparison therewith.

According to claim 2 of the present invention, a decrease in engine output is detected by arranging pieces of frequency distribution information showing a relationship between the size of a power shift pressure and occurrence frequency in time series and by comparing these pieces of frequency distribution information with each other. Therefore, a decrease in engine output can be easily detected by the frequency distribution information regarding the power shift pressure, which can be easily detected, without using threshold values.

According to claim 3 of the present invention, a decrease in engine output is detected by arranging pieces of frequency distribution information showing a relationship between the size of a boost pressure and occurrence frequency in time series and by comparing these pieces of frequency distribution information with each other. Therefore, a decrease in engine output can be easily detected by the frequency distribution information about the boost pressure, which can be easily detected, without using threshold values.

According to claim 4 of the present invention, a decrease in engine output is detected by arranging pieces of frequency distribution information showing a relationship between the size of engine speed and occurrence frequency in time series and by comparing these pieces of frequency distribution information with each other. Therefore, a decrease in engine output can be easily detected by the frequency distribution information about the engine speed, which can be easily detected, without using threshold values.

According to claim 5 of the present invention, if the amount of change caused when the output of the engine is reduced falls within a given range, a determination is made that a decrease in engine output has been caused by inferior fuel, whereas, if the amount of change does not fall within the given range, a determination is made that a decrease in engine output has been caused by engine failure. Therefore, proper dealing can be performed for the cause by which the output of the engine is reduced.

According to claim 6 of the present invention, unlike a case in which the abnormality/failure is determined by comparison with a conventional threshold value or in which the degree of such abnormality is ranked by comparison therewith, a machine diagnosing system can be provided which is capable of detecting a decrease in engine output, without using threshold values, with a comparison between pieces of frequency distribution information stored concerning the output of the engine by use of the dynamic state management controller that creates frequency distribution information concerning a signal related to the output of the engine whenever the machine is operated for a predetermined time, the management section that receives and stores pieces of frequency distribution information, and terminal equipment each of which detects a decrease in engine output by arranging the pieces of frequency distribution information obtained from the management section in time series and by comparing these pieces of frequency distribution information with each other.

### BRIEF DESCRIPTION OF THE DRAWINGS

[Fig.1] Fig.1 is a schematic view showing an embodiment of a machine diagnosing system according to the present invention.
[Fig. 2] Fig. 2 is a block diagram showing an example of a dynamic state management controller used in the machine diagnosing system.
[Fig. 3] Fig. 3 is an explanatory drawing explaining operations performed on the side of the dynamic state management controller in a machine diagnosing method according to the machine diagnosing system.
[Fig. 4] Fig. 4 is a characteristic diagram explaining a frequency distribution characteristic comparison operation performed on the side of a management section in the machine diagnosing method.
[Fig. 5] Fig. 5 is a flow chart showing an example of the machine diagnosing method.
[Fig. 6] Fig. 6 is a flow chart showing another example of the machine diagnosing method.
[Fig. 7] Fig. 7 is a characteristic diagram showing a power shift pressure frequency distribution used in the machine diagnosing method.
[Fig. 8] Fig. 8 is a characteristic diagram showing a boost pressure frequency distribution used in the machine diagnosing method.
[Fig. 9] Fig. 9 is a characteristic diagram showing an engine speed frequency distribution in accelerator dial No. 9 used in the machine diagnosing method.
[Fig. 10] Fig. 10 is a characteristic diagram showing an engine speed frequency distribution in accelerator dial No. 8 used in the machine diagnosing method.
[Fig. 11] Fig. 11 is a schematic view showing a conventional machine diagnosing method.
[Fig. 12] Fig. 12 is a characteristic diagram showing an example of measurement results obtained by a two-pump relief operation used to evaluate the conventional machine performance.

### DESCRIPTION OF THE REFERENCE NUMERALS

11: Machine
15: Management section
17,19: Customer terminal equipment and office terminal equipment each of which is used as a terminal equipment
22: Engine
24: dynamic state management controller
28: Pump
29: Regulator
30: Turbo charger

### BEST MODE FOR CARRYING OUT THE INVENTION

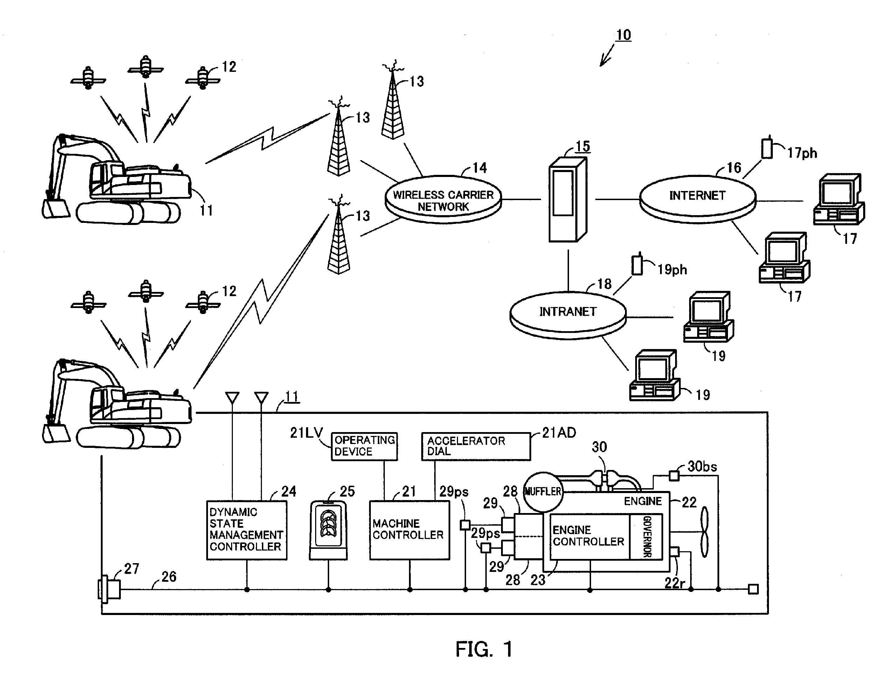

An embodiment of the present invention will be hereinafter described in detail with reference to Fig. 1 through Fig. 10.

Fig. 1 is a schematic view of a work-machine remote operation management system 10 that serves as a premise of a machine diagnosing system according to the present invention. The work-machine remote operation management system 10 is used to perform the dynamic state management of a machine body 11 of a work machine at a remote place by means of radio communication. The machine body 11 includes a dynamic state management controller (described later) having an operating data storage function, a radio communication function, and a position-measuring function fulfilled by a global positioning system satellite (hereinafter, the global positioning system is referred to simply as "GPS") 12. Although the work machine shown in Fig. 1 is a hydraulic shovel, a bulldozer or a loader may be used as the work machine.

The dynamic state management controller of the machine body 11 can communicate with a management section 15 via a relay station 13 and a wireless carrier network 14. The wireless carrier network 14 is a cellular phone network through which the dynamic state management controller of the machine body 11 and the management section 15 are connected together by the combined use of cellular phone communications and satellite communications.

The management section 15 primarily includes a server that serves as a primary element of the management section 15 and that is installed in, for example, the office of a work-machinery-producing maker. The management section 15 additionally includes customer terminal equipment 17 and customer cellular phones 17ph each of which is used as a terminal equipment communicably via an Internet network 16 used as a telecommunication line. The management section 15 still additionally includes office terminal equipment 19 and in-house cellular phones 19ph each of which is used as terminal equipment communicably via a maker-affiliated Intranet network 18 used as a telecommunication line.

The server of the management section 15 receives and preserves vehicle information regarding the machine body 11 (i.e., vehicle name (machine number), model, construction equipment serial number, etc.) that is transmitted from the dynamic state management controller of the machine body 11 in radio communication, and dynamic state data (i.e., operating data (operation information, machine information, warning information, and maintenance information) and location information (map display by the GPS satellite 12)). Furthermore, the server of the management section 15 reflects these pieces of information received therefrom in a Web site (membership site), and provides information to customers and servicepersons working in a maker or in a selling office through the Internet networ 16 or the Intranet network 18 by means of the Web or a mailer.

The customer terminal equipment 17 or the office terminal equipment 19 is chiefly a personal computer by which a customer or a serviceperson accesses the management section 15 through the Internet network 16 or the Intranet network 18, and browses operating data regarding the machine body 11 owned by or in the charge of the customer or the serviceperson by means of a web browser or a mailer.

The operating data includes operating information (operating time, fuel residual quantity, etc.), machine information (temperature, engine rotating speed, i.e., the engine speed, hydraulic equipment state such as pressure, etc.), warning information (unauthorized key insertion, malfunction detection, etc.), and maintenance information (oil change time, filter change time, etc.).

In the machine body 11, a machine controller 21 that controls various pieces of equipment of the machine body 11, an engine controller 23 that controls fuel injection (injection quantity, pressure, and timing) of the engine 22 via a governor, a dynamic state management controller 24, and a monitor 25 that is a display provided with an input function are connected together by means of a data link line 26. An end of the data link line 26 is connected to a vehicle-side connector 27 used for service tools.

Since a notebook-sized personal computer (laptop computer) or the like can be connected to the vehicle-side connector 27 via a communication adapter, the notebook computer can be allowed to communicate with the machine controller 21 and the dynamic state management controller 24 via the data link line 26, and can indicate machine information or the like on the display thereof in real time.

An accelerator dial 21AD, which is used to classify the engine speed counted during no-load running into a plurality of stages, and an operating device 21LV, such as an operating lever, are electrically connected to the input side of the machine controller 21. If the operating device 21LV is a pilot type one, a pilot pressure proportional to the operation amount of the device is converted into an electric signal by means of a pressure sensor, and the resulting electric signal is input into the machine controller 21.

The engine 22 is provided with an engine speed sensor 22r used to detect a necessary engine speed to control the engine, and an output part thereof is connected to a data link line 26.

The engine 22 is additionally provided with a pair of variable displacement pumps 28 that are driven by the engine 22. These variable displacement pumps 28 have regulators 29, respectively, which control a variable displacement means such as a pump swash plate. If a power shift pressure that optimally controls pump output calculated by the pump controller acts on these pump control regulators 29, a pump discharge pressure-flow rate characteristic curve can be controllably shifted into an optimal one. A power shift pressure sensor 29ps used to detect the power shift pressure is provided for each of the pump control regulators 29. An output part of the power shift pressure sensor 29ps is connected to the data link line 26.

A turbo charger 30 that drives a turbine disposed in an exhaust pipe line by means of an exhaust gas and that drives an air compressor disposed in an intake pipe line by means of the turbine is provided in the exhaust pipe line and the intake pipe line of the engine 22. A boost pressure sensor 30bs which detects a boost pressure supercharged to the intake side of the engine by the turbo charger 30 is provided. An output part of the boost pressure sensor 30bs is connected to the data link line 26.

In the thus structured work-machine remote operation management system 10 of the machine diagnosing system, the dynamic state management controller 24 mounted on the machine body 11 has an operating data storage function, according to which frequency distribution information that shows a relationship between signal intensity related to the output of the engine of the machine body 11 and occurrence frequency is generated whenever the machine body 11 is operated for a predetermined time, and a radio communication function. The management section 15 has a function to receive and store pieces of frequency distribution information transmitted by the radio communication function of the dynamic state management controller 24. The customer terminal equipment 17 or the office terminal equipment 19 serving as a terminal equipment has a function to detect a decrease in engine output by arranging pieces of frequency distribution information obtained from the management section 15 through a telecommunication line in time series and by comparing these pieces of information with each other.

A power shift pressure that acts on the regulator 29 controlling the pump 28 driven by the engine 22 and that controls the output of the pump 28, a boost pressure supercharged to the engine intake side by means of the turbo charger 30, or an engine speed is used as a signal related to the engine output.

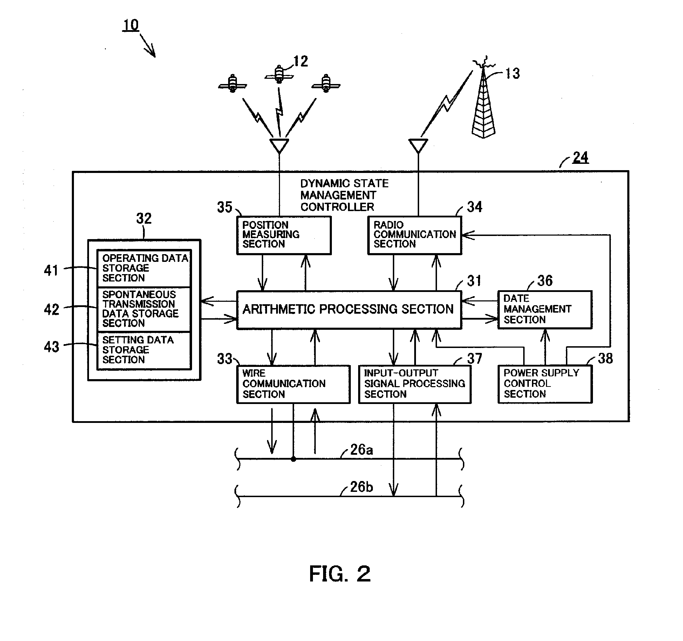

Next, a description will be given of the dynamic state management controller 24 that controls data transfer to the inside and outside of the machine body 11 shown in Fig. 2.

The dynamic state management controller 24 is connected to an engine starting circuit (not shown) in parallel with a main power circuit connected directly to a battery (not shown) of the machine body 11. Therefore, even if an engine key switch of the engine starting circuit is turned off, the dynamic state management controller 24 can maintain an operating state while receiving power from a main power supply unless a main power switch is turned off.

The dynamic state management controller 24 consists of an arithmetic processing section 31, a storage section 32 connected to the arithmetic processing section 31, a wire communication section 33, a radio communication section 34, a position measuring section 35, a date management section 36, an input-output signal processing section 37, and a power supply control section 38.

The arithmetic processing section 31 outputs commands to the sections 32 to 37, for example, regarding data transfer in the dynamic state management controller 24. The storage section 32 is a nonvolatile memory that stores operating data concerning the work machine written from the arithmetic processing section 31 (i.e., operating information, machine information, maintenance information, and warning information) and setting data in which conditions serving as the instruction criterion of the arithmetic processing section are described. The storage section 32 has a storage area divided into three sections, i.e., an operating data storage section 41, a spontaneous transmission data storage section 42, and a setting data storage section 43, according to data to be stored.

The wire communication section 33 performs data communication with other controllers (e.g., the machine controller 21) disposed in the machine body 11 via the data link line 26a. The radio communication section 34 includes radio communication equipment that can use the wireless carrier network 14 and a memory, and performs data communication with the management section 15 via the wireless carrier network 14. The memory of the radio communication section 34 has an area in which telephone numbers (contact data) of the management section 15 are stored and in which E-mails for a call from the management section 15 are stored.

The position measuring section 35 includes a GPS receiver by which radio waves emitted from the GPS satellite 12 are received to determine the present location. The date management section 36 includes a clock means and a battery charger, which is a specific one by which date data can be managed without losing the date data even when the main power supply is turned off. When the date and time come to given ones pre-set by the arithmetic processing section 31, the date management section 36 outputs data to the arithmetic processing section 31.

The input-output signal processing section 37 is connected to various pieces of equipmentuch as sensors and relays, via the data link line 26b. The input-output signal processing section 37 puts operating data obtained from the sensors into the dynamic state management controller 24 as machine information, and outputs the data to, for example, the relays.

The power supply control section 38 is connected to the arithmetic processing section 31, the radio communication section 34, and the date management section 36, and controls the ON/OFF of internal power supplies of these sections.

The storage of each data into the storage section 32 is processed according to a command emitted from the arithmetic processing section 31. Among the pieces of data, the operating data, such as operating information (operating time information and fuel residual quantity information), machine information (temperature, engine speed, and hydraulic equipmenttate such as pressure), maintenance information, and warning information, which have been obtained from an operating time integrating meter and sensors (e.g., a fuel residual quantity sensor, a temperature sensor, the engine speed sensor 22r, pressure sensors such as the power shift pressure sensor 29ps and the boost pressure sensor 30bs) provided on various pieces of equipment of the machine body 11 are stored in the operating data storage section 41 of the storage section 32 through the input-output signal processing section 37 and the arithmetic processing section 31.

If there is an abnormal data that meets a condition issuing a warning in these pieces of operating data, this is stored in the spontaneous transmission data storage section 42 as warning information. If warning information is stored in the spontaneous transmission data storage section 42, the arithmetic processing section 31 emits a command to allow the side of the management section 15 to transmit warning information, regardless of the presence or absence of an E-mail for a call from the management section 15, as described later.

The control command of the arithmetic processing section 31 is based on the setting data stored in the setting data storage section 43 of the storage section 32. Setting data to be updated is transmitted from the side of the management section 15, and is stored in the setting data storage section 43.

Next, a description of communication processing in the dynamic state management controller 24 will be given.

As long as the main power switch is in an ON state, the arithmetic processing section 31 always checks whether an E-mail for a call from the management section 15 has been received and stored in the memory of the radio communication section 34.

If an E-mail for a call is transmitted from the management section 15, this mail is received by the radio communication section 34, and is immediately stored in the memory of the radio communication section 34. When the arithmetic processing section 31 checking such a mail confirms that the mail has been stored therein, the radio communication section 34 is allowed to take the telephone number of the management section 15 from the memory of the radio communication section 34 and to make a telephone call to the management section 15.

When the radio communication section 34 communicates with the management section 15, setting data is transmitted from the management section 15 if the management section has such setting data, and a transmission request of a desired machine 11 is transmitted. The arithmetic processing section 31 first confirms whether the setting data has been received. If the setting data has been received, this is stored in the setting data storage section 43 of the storage section 32 and is updated. A result that has completed updating is returned to the management section 15. The setting data is a control command of the arithmetic processing section 31 as mentioned above. After updating, control is performed based on setting data subjected to the updating.

Thereafter, the arithmetic processing section 31 confirms a request for operating data, then takes a piece of operating data of the desired machine body 11 from the operating data storage section 41, and allows the radio communication section 34 to transmit the data to the management section 15. On the side of the management section 15 that has received the operating data, this data is reflected in a Web site, and is provided to a customer or a serviceperson as a piece of information.

Thereafter, the arithmetic processing section 31 confirms the presence or absence of warning information in the spontaneous transmission data storage section 42 of the storage section 32. If there is warning information, this is taken out, and is transmitted from the radio communication section 34 to the management section 15.

On the side of the management section 15 that has received the warning information, this information is reflected in a Web site, and an E-mail to the effect that warning information has been received is transmitted to the cellular phones 17ph and 19ph of the customer or the serviceperson registered on the side of the management section 15.

When a predetermined time elapses after transmitting each piece of data, the arithmetic processing section 31 forcedly cuts off the communication line. If there is no E-mail for a call from the management section 15, the arithmetic processing section 31 always checks whether there is warning information in the spontaneous transmission data storage section 42 of the storage section 32. If there is an E-mail for a call from the management section 15, a telephone call is made from the radio communication section 34 to the management section 15, and warning information is transmitted.

Next, a description of an actual data flow including customers and servicepersons of the work-machine remote operation management system 10 will be given.

When a customer and a serviceperson working in an office (including a shop) want to know an operational status of a machine body 11 owned by or in the charge of the customer or the serviceperson, they access a Web site run by the management section 15 from the customer terminal equipment 17 or the office terminal equipment 19 of each person via the Internet network 16 or the Intranet network 18, and log thereinto by use of each ID and each password. Thereafter, a request is made to obtain operating data of the machine body 11 desired by the customer or the serviceperson.

On the side of the management section 15, access data to the desired machine body 11 requested thereby is acquired from its own data base, and, based on this data, an E-mail for a call is transmitted to the desired machine body 11 via the wireless carrier network 14.

On the other hand, on the side of the machine body 11, the E-mail for a call is received by the radio communication section 34 of the dynamic state management controller 24. When the arithmetic processing section 31 of the dynamic state management controller 24 confirms that the E-mail has been stored, a telephone call command is emitted to the radio communication section 34, and a telephone call is made to the side of the management section 15 via the wireless carrier network 14 including a cellular phone communication network.

On the side of the management section 15 that has received the telephone call, a signal to request the operating data is output. On the side of the machine body 11, this signal is received, and, in the dynamic state management controller 24, the arithmetic processing section 31 acquires desired operating data from the storage section 32, and allows the radio communication section 34 to output the operating data. The management section 15 receives and temporarily stores this data in its data base, and reflects this data in a Web site in a predetermined output form. As a result, desired operating data at that time is displayed in the customer terminal equipment 17 or the office terminal equipment 19.

In this data flow, the dynamic state management controller 24 of the machine body 11 directly receives a power supply from the battery of the machine body 11 even when the engine key switch is in an OFF state, and is working unless the main power switch is turned off. Even when the machine body 11 does not operate, the dynamic state management controller 24 is ready to make a response while always watching an E-mail for a call from the management section 15. Therefore, unless the main power switch is turned off, a customer or a serviceperson working in an office (including a shop) can always request or acquire real-time operating data of the desired machine body 11 through the Web site run by the management section 15.

If the warning information mentioned above is stored in the spontaneous transmission data storage section 42, this information is immediately transmitted from the side of the machine body 11 to the side of the management section 15, and is output to the customer terminal equipment 17 or the office terminal equipment 19 in the form of an E-mail as long as the main power switch is in an ON state. Therefore, a customer or a serviceperson can know in real time that the machine body 11 is abnormal.

All requests for operating data from the customer terminal equipment 17 or the office terminal equipment 19 are made by a route passing through the management section 15. As a result, a destination to which the machine body 11 transmits operating data is only the management section 15, and data transmission is started depending only on the presence or absence of an E-mail for a call from the management section 15. Therefore, a mechanism for authentication of a customer to whom data is given is never needed for the machine body 11. In addition, data is not given when accessed. A call is completed by its call, and thereafter a telephone call is made from the side of the machine body 11 only to the management section 15 registered as a destination, and data is transmitted to this section. Therefore, a simple system structure can be formed including the machine body 11 and the management section 15, and there is no fear that data will leak out.

The side of the management section 15 collectively performs a data transfer to the machine body 11, and received data is reflected in a Web site, and is provided to a customer or a serviceperson. Therefore, for example, even if only raw data consisting of numerical values is received from the machine body 11, this raw data consisting only of numerical values can be processed into a display style desired by the customer or the serviceperson at a stage where the data is reflected in the Web site, and can be displayed.

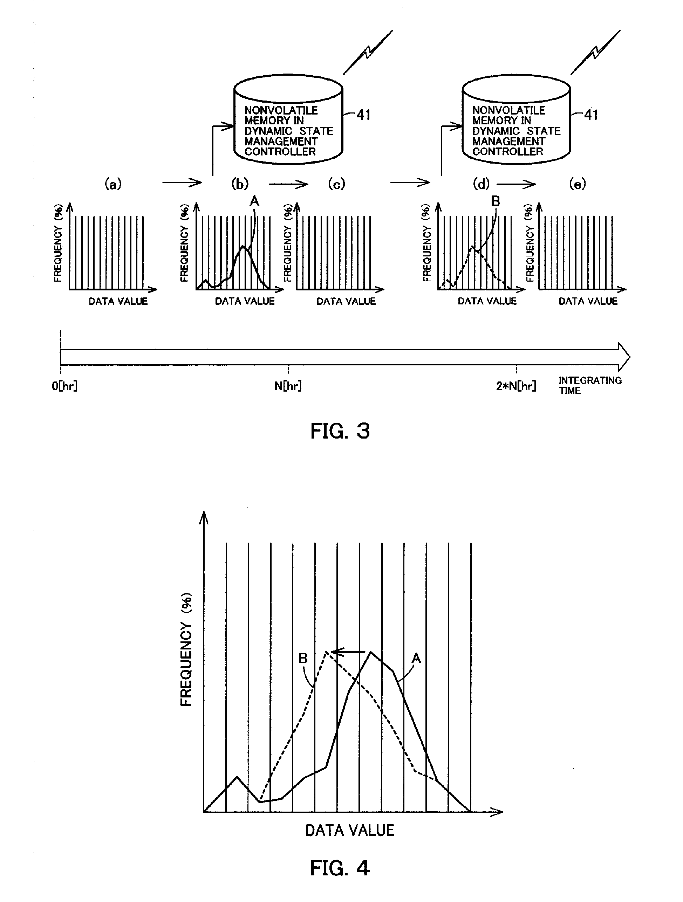

Next, referring to Fig. 3 and Fig. 4, a description will be given of an example of the machine diagnosing method using the work-machine remote operation management system 10.

(a) The following integrating is started by the dynamic state management controller 24 that is mounted on the machine body 11 and that has an operating data storage function and a radio communication function.

(b) Signals related to the engine output of the machine body 11 (e.g., data values of main parameters such as power shift pressure, boost pressure, or engine speed) are detected in each given cycle, and occurrence frequency is integrated by classifying the data values according to the size of value. Thereby, frequency distribution information "A" for a fixed operating time N (minute) showing a relationship between the size of a data value and occurrence frequency is created, and is stored in a nonvolatile memory of the operating data storage section 41.

(c) The dynamic state management controller 24 resets the frequency distribution information "A", and then integrating is restarted in the same way as above. On the other hand, when a fixed operating time N elapses from the beginning of integrating, the frequency distribution information "A" stored in the nonvolatile memory of the operating data storage section 41 is transmitted to the server of the management section 15 from the radio communication section 34 of the dynamic state management controller 24 through the relay station 13 and the wireless carrier network 14 in accordance with a request signal emitted from the management section 15.

(d) Data values of the main parameters related to the engine output of the machine body 11 are again detected in each fixed cycle, and frequency distribution information "B" for a fixed operating time N (minute) is created, and is stored in the nonvolatile memory of the operating data storage section 41.

(e) The dynamic state management controller 24 resets the frequency distribution information "B", and then integrating is repeatedly performed in the same way as above. On the other hand, when a fixed operating time N elapses from the beginning of the integrating (i.e., when 2* N minutes elapse from the beginning of the first integrating), the frequency distribution information "B" stored in the nonvolatile memory of the operating data storage section 41 is transmitted to the server of the management section 15 from the radio communication section 34 of the dynamic state management controller 24 through the relay station 13 and the wireless carrier network 14 in accordance with a request signal emitted from the management section 15.

The pieces of frequency distribution information "A" and "B" that are generated for each fixed operating time of the machine body 11 in this way and that show a relationship between the size of the data value of each of the main parameters related to the engine output and occurrence frequency are transmitted to the server of the management section 15 by means of a radio communication function of the dynamic state management controller 24 in accordance with a request signal emitted from the management section 15, and are stored in the server as shown in Fig. 4.

Therefore, a customer and a serviceperson working in the office of a maker or in a shop arrange the pieces of frequency distribution information "A" and "B" stored in the server of the management section 15 in time series and compare these information with each other by the customer terminal equipment 17 or the office terminal equipment 19, and hence can detect a decrease in engine output that shows that the performance of the machine body 11 is abnormal and the cause of the decrease from the movement of the waveforms thereof as described later.

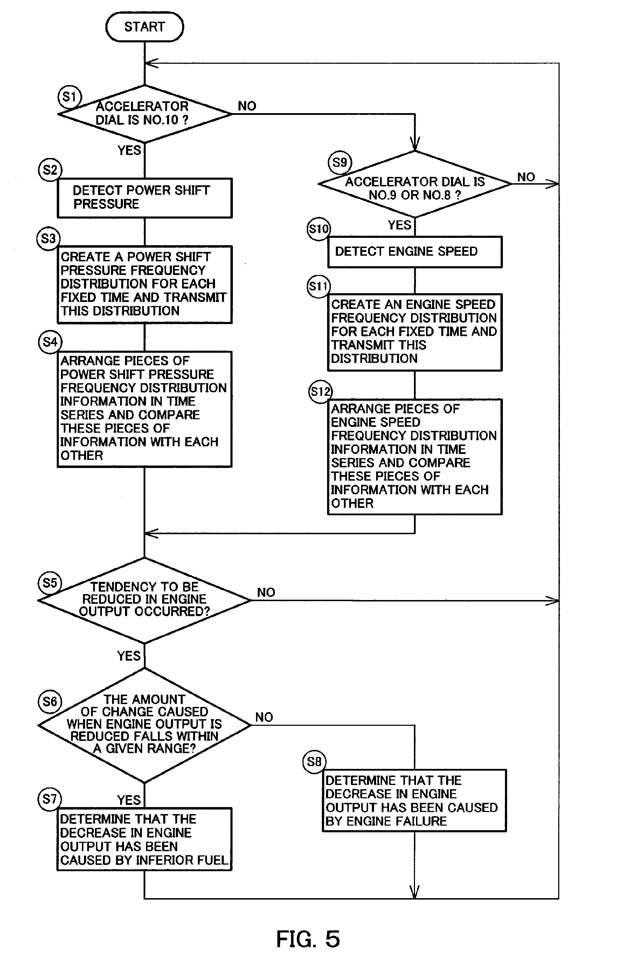

Next, an example of the machine diagnosing method will be described with reference to the flow chart of Fig. 5.

### (Step S1)

A determination is made as to whether an accelerator dial 21AD has been set at No.10.

### (Step S2)

If the accelerator dial 21AD has been set at No.10 which is the highest number, the power shift pressure controlling the pump output is changed so that the engine speed reaches a target engine speed, and a load exerted on the engine is controlled to be changed. Therefore, if the accelerator dial 21AD has been set at No.10, the power shift pressure will be automatically changed according to the actual output of the engine 22, and hence the output of the engine 22 can be determined by subjecting this power shift pressure to frequency analysis. Therefore, if the accelerator dial 21AD has been set at No.10, the power shift pressure is detected by the power shift pressure sensor 29ps.

### (Step S3)

The dynamic state management controller 24 that is mounted on the machine body 11 and that has an operating data storage function and a radio communication function creates powershift-pressure frequency distribution information that shows a relationship between the size of a power shift pressure related to the engine output and occurrence frequency for each operation of the machine body 11 for a fixed time as shown in Fig. 3, and transmits this information to the management section 15 by means of the radio communication function of the dynamic state management controller 24.

### (Step S4)

The management section 15 stores the received pieces of power shift pressure frequency distribution information. Therefore, for example, a serviceperson working in a shop arranges the pieces of power shift pressure frequency distribution information in time series and compares these with each other by, for example, the office terminal equipment 19 as shown in Fig. 4.

### (Step S5)

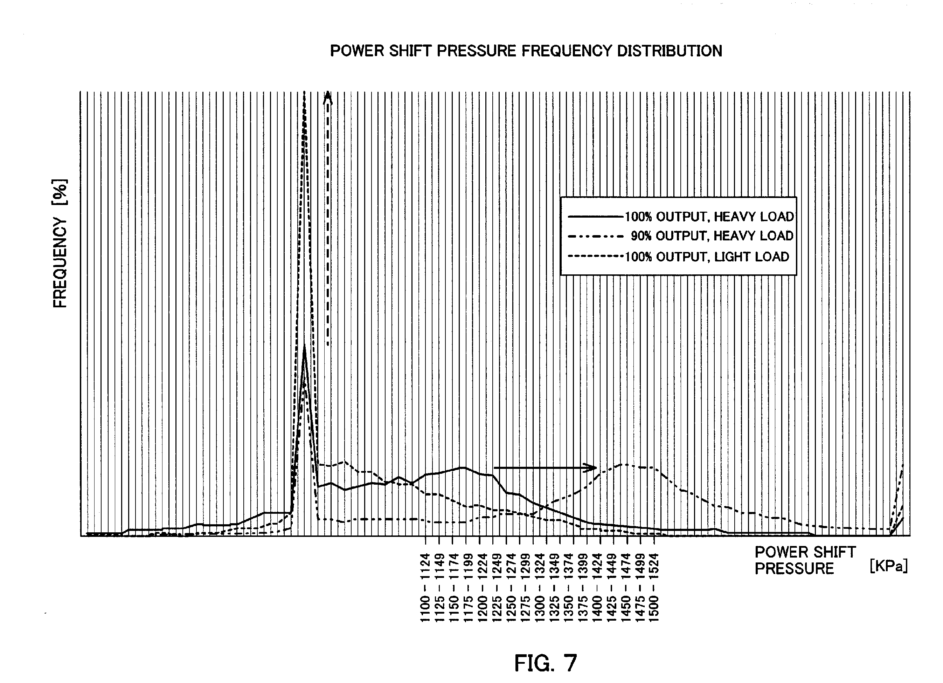

Such a serviceperson watches a varying state of the pieces of power shift pressure frequency distribution information, or the office terminal equipment 19 or the like automatically judges a varying state thereof, and, based on this, a determination is made as to whether a tendency to be reduced in engine output has occurred. A concrete example of this will be described with reference to Fig. 7.

### (Step S6)

If a tendency to be reduced in engine output has occurred, a determination is made as to whether the amount of power shift pressure frequency distribution information changed at that time falls within a given range. That is, a decrease in engine output is brought about by two causes, i.e., by engine abnormality (engine failure) and use of inferior fuel. There is a difference in how to be changed when engine output is reduced and in the amount of change between engine abnormality (engine failure) and use of inferior fuel. Therefore, these two causes must be distinguished from each other.

### (Step S7)

If the amount of power shift pressure frequency distribution information changed at that time falls within the given range, a determination is made that a decrease in engine output has been caused by inferior fuel. Concerning the inferior fuel, the amount of change can be specified to some degree by pre-testing the fuel by use of a real machine, and hence, from this amount of change, a determination is made that inferior fuel has been used.

### (Step S8)

If the amount of power shift pressure frequency distribution information changed at that time does not fall within the given range, a determination is made that a decrease in engine output has been caused by engine failure. For example, a decrease in engine output caused by inferior fuel is suddenly changed from a point of time when fuel is injected, whereas a decrease in engine output caused by engine failure is changed little by little, that is, engine output is gradually decreased by engine failure, and hence the amount of change is smaller than the given range. If engine failure suddenly occurs, the amount of change becomes extremely greater than the given range, in comparison with inferior fuel. Therefore, if the amount of power shift pressure frequency distribution information changed at that time is deviated toward a smaller or greater range than the given range, a determination is made that a decrease in engine output has been caused by engine failure.

### (Step S9)

If the accelerator dial 21AD has not been set at No.10 at step S1, a determination is made as to whether the accelerator dial 21AD has been set at No.9 or No.8.

### (Step S10)

When the accelerator dial 21AD is set at No.9 or No.8 which is on a lower-speed side than No.10, the power shift pressure is fixed, and a change in engine output occurs in the engine speed, and hence this engine speed is detected. Specifically, although a command to run the engine at a target engine speed is issued to the engine, the power shift pressure or the like is not controlled so that the engine can reach such a target engine speed. Therefore, for example, a fall in the engine speed caused when a load is first applied changes according to the real output of the engine, and hence, in order to know the output of the engine 22 by subjecting the engine speed to frequency analysis, the engine speed is detected by the engine speed sensor 22r.

### (Step S11)

The dynamic state management controller 24 that is mounted on the machine body 11 and that has an operating data storage function and a radio communication function creates information regarding the frequency distribution of engine speed that shows a relationship between the size of the engine speed related to the output of the engine and occurrence frequency for each operation of the machine body 11 for a fixed time as shown in Fig. 3, and transmits this information to the management section 15 by means of the radio communication function of the dynamic state management controller 24.

### (Sep S12)

The management section 15 stores the received pieces of engine-speed frequency distribution information. Therefore, for example, a serviceperson working in a shop arranges these pieces of information in time series and compares these pieces of information with each other by, for example, the office terminal equipment 19 as shown in Fig. 4.

### (Steps S5 to S8)

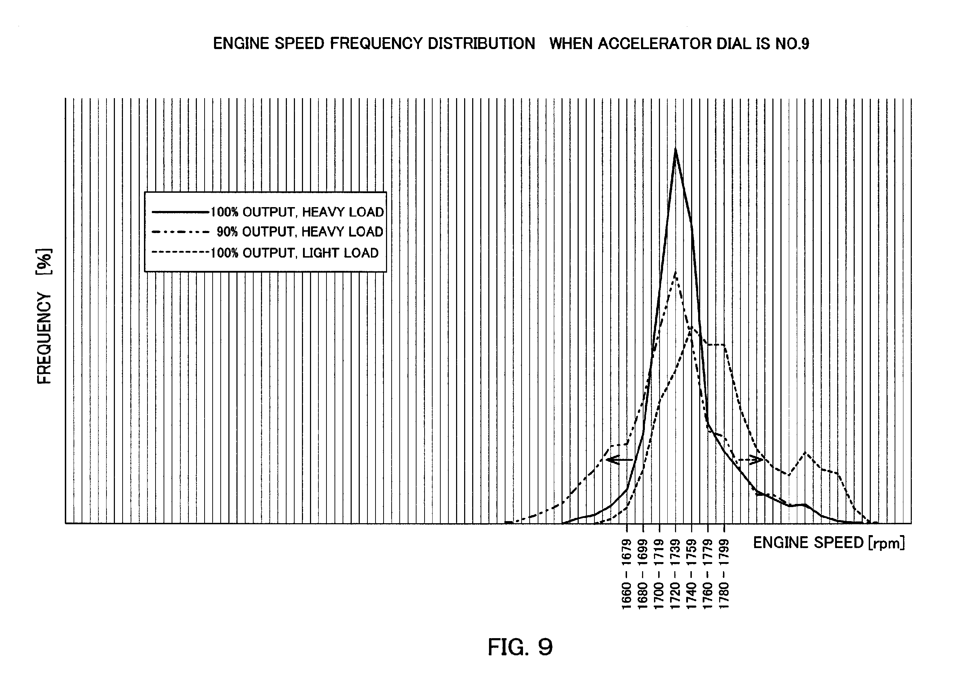

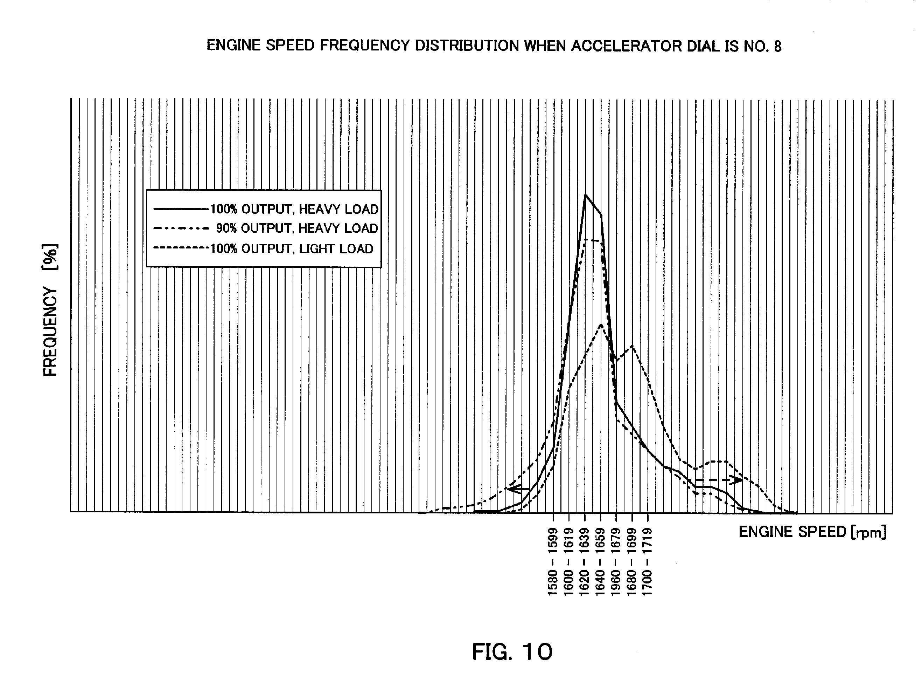

Such a serviceperson watches a varying state of the pieces of engine-speed frequency distribution information, or the office terminal equipment 19 or the like automatically judges a varying state thereof, and, based on this, a determination is made as to whether a tendency to be reduced in engine output has occurred. A concrete example of this will be described with reference to Fig. 9 and Fig. 10.

If a tendency to be reduced in engine output has occurred, a determination is made as to whether the amount of engine-speed frequency distribution information changed at that time falls within a given range. If the amount of engine-speed frequency distribution information changed at that time falls within the given range, a determination is made that a decrease in engine output has been caused by inferior fuel. If the amount of engine-speed frequency distribution information changed at that time does not fall within the given range, a determination is made that a decrease in engine output has been caused by engine failure.

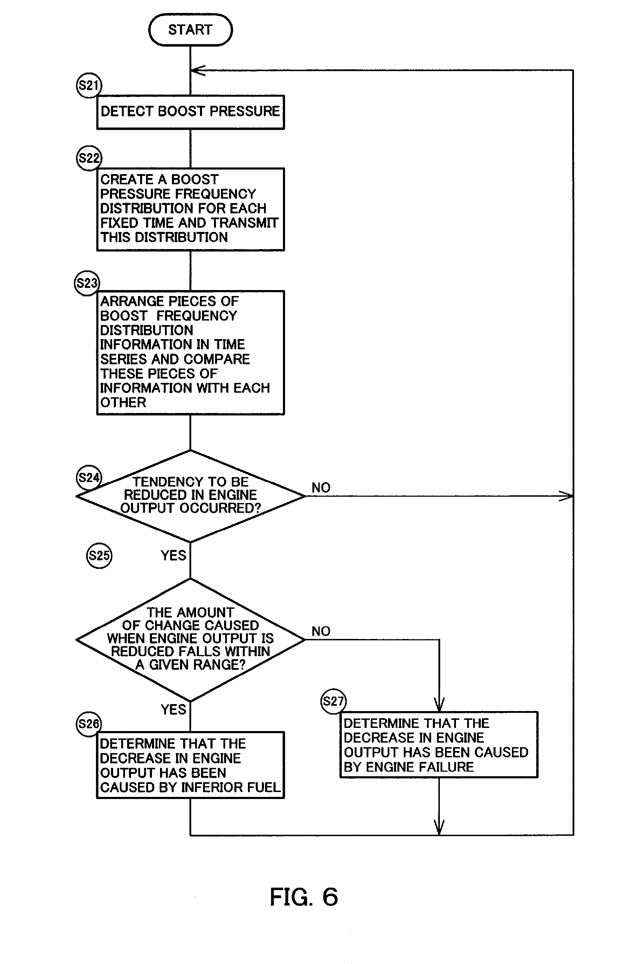

Next, another example of the machine diagnosing method will be described with reference to the flow chart of Fig. 6.

### (Step S21)

A boost pressure by which an intake is controlled according to an engine load and an engine speed and that is supercharged to the engine intake side by the turbo charger 30 is automatically controlled in relation to the output of the engine 22. Therefore, the output of the engine 22 can be determined by selecting this boost pressure and making frequency analysis, and hence this boost pressure is detected.

### (Step S22)

The dynamic state management controller 24 that is mounted on the machine body 11 and that has an operating data storage function and a radio communication function creates information regarding a boost-pressure frequency distribution that shows a relationship between the size of a boost pressure related to the output of the engine and occurrence frequency for each operation of the machine body 11 for a fixed time as shown in Fig. 3, and transmits this information to the management section 15 by means of the radio communication function of the dynamic state management controller 24.

### (Step S23)

The management section 15 stores the received pieces of boost-pressure frequency distribution information. Therefore, for example, a serviceperson working in a shop arranges these pieces of information in time series and compares these pieces of information with each other by, for example, the office terminal equipment 19 as shown in Fig. 4.

### (Step S24)

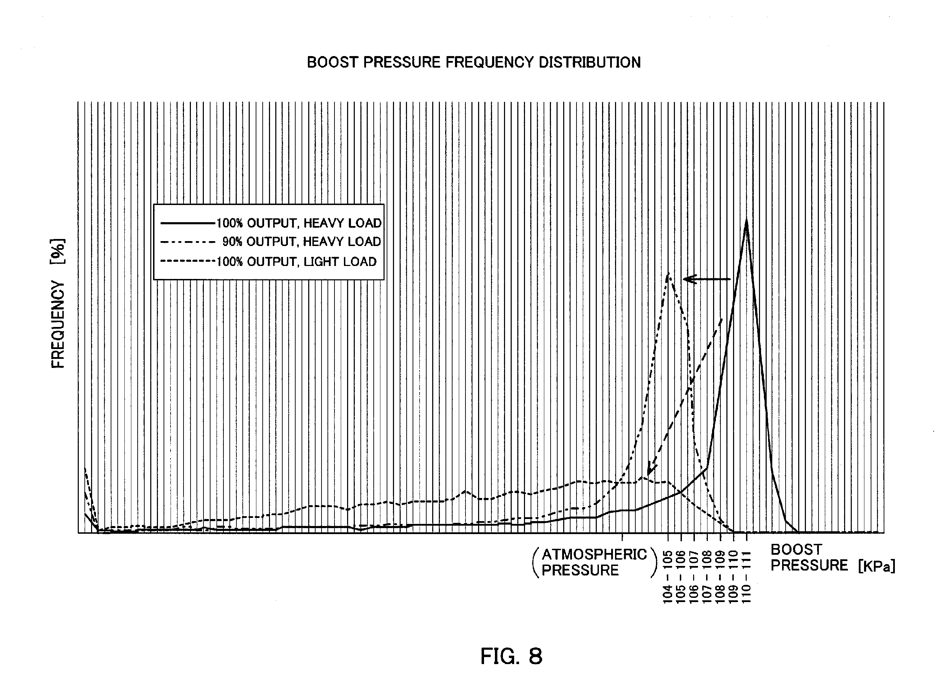

Such a serviceperson watches a varying state of these pieces of boost-pressure frequency distribution information, or the office terminal equipment 19 or the like automatically judges a varying state thereof, and, based on this, a determination is made as to whether a tendency to be reduced in engine output has occurred. A concrete example of this will be described with reference to Fig. 8.

### (Step S25)

If a tendency to be reduced in engine output has occurred, a determination is made as to whether the amount of boost-pressure frequency distribution information changed at that time falls within a given range. That is, a decrease in engine output is brought about by two causes, i.e., by engine abnormality (engine failure) and use of inferior fuel. There is a difference in how to be changed when engine output is reduced and in the amount of change between engine abnormality (engine failure) and use of inferior fuel. Therefore, these two causes must be distinguished from each other.

### (Step S26)

If the amount of boost-pressure frequency distribution information changed at that time falls within the given range, a determination is made that a decrease in engine output has been caused by inferior fuel. Concerning the inferior fuel, the amount of change can be specified to some degree by pre-testing the fuel by use of a real machine, and hence, from this amount of change, a determination is made that inferior fuel has been used.

### (Step S27)

If the amount of boost-pressure frequency distribution information changed at that time does not fall within the given range, a determination is made that a decrease in engine output has been caused by engine failure. For example, a decrease in engine output caused by inferior fuel is suddenly changed from a point of time when fuel is injected, whereas a decrease in engine output caused by engine failure is changed little by little, specifically, the output of the engine is gradually decreased by engine failure, and hence the amount of change is smaller than the given range. If engine failure suddenly occurs, the amount of change becomes extremely greater than the given range, in comparison with inferior fuel. Therefore, if the amount of boost-pressure frequency distribution information changed at that time is deviated toward a smaller or greater range than the given range, a determination is made that a decrease in engine output has been caused by engine failure.

Fig. 7 through Fig. 10 show verification test results. According to three operation patterns classified by changing the amount of fuel consumption and work details, a hydraulic shovel is operated for ten hours for each pattern. Pieces of frequency distribution information are created by the dynamic state management controller 24, and are stored in the server of the management section 15. These pieces of frequency distribution information are taken out by, for example, the office terminal equipment 19, and data regarding the three operation patterns are compared with each other.

The operation patterns consist of a pattern (characteristic shown by the solid line) in which heavy-load work having a heavy load, such as excavating work, is performed by the amount of fuel consumption of 100%, a pattern (characteristic shown by the two-dot chain line) in which the same heavy-load work as above is performed by reducing the amount of fuel consumption to 90%, and a pattern (characteristic shown by the dotted line) in which light-load work having a light load, such as smoothing work, is performed without changing the amount of fuel consumption of 100%.

First, Fig. 7 shows an example in which a decrease in engine output is detected by arranging pieces of power shift pressure frequency distribution information in time series and comparing these pieces of information with each other.

In these pieces of power shift pressure frequency distribution information, when the output of the engine is reduced, a crest of the 90% output waveform shown by the two-dot chain line, which corresponds to a crest at the right of the peak of the 100% output waveform shown by the solid line, is transformed to move toward the right (i.e., toward the highpressure side shown by the arrow of the solid line). Therefore, the degree of a decrease in engine output can be determined from this amount of transformation.

When the work load is changed, the light-load waveform shown by the dotted line is transformed in a direction (i.e., direction shown by the arrow of the dotted line) in which the peak frequency is extremely high although the heavy-load waveform shown by the solid line has a low peak frequency, and hence the degree of the work load can be determined from this amount of transformation.

Next, Fig. 8 shows an example in which a decrease in engine output is detected by arranging pieces of boost pressure frequency distribution information in time series and comparing these pieces of information with each other.

In these pieces of boost pressure frequency distribution information, when the output of the engine is reduced, the peak position of the 90% output waveform shown by the two-dot chain line, which corresponds to the peak position of the 100% output waveform shown by the solid line, is transformed to move toward the left(i.e.,toward the low-pressure side shown by the arrow of the solid line). Therefore, the degree of a decrease in engine output can be determined from this amount of transformation.

Additionally, when the work load is changed, the light-load waveform shown by the dotted line is transformed in a direction (i.e., direction shown by the arrow of the dotted line) in which the peak frequency is extremely low although the heavy-load waveform shown by the solid line has a high peak frequency, and hence the degree of the work load can be determined from this amount of transformation.

Next, Fig. 9 shows an example in which a decrease in engine output is detected by arranging pieces of engine speed frequency distribution information in time series and comparing these pieces of information with each other in a case in which the accelerator dial 21AD is set at No.9. Fig. 10 shows an example in which a decrease in engine output is detected by arranging pieces of engine speed frequency distribution information in time series and comparing these pieces of information with each other in a case in which the accelerator dial 21AD is set at No.8.

In these pieces of engine speed frequency distribution information, when the output of the engine is reduced, the 90% output waveform shown by the two-dot chain line, which corresponds to the 100% output waveform shown by the solid line, is transformed so that the left slope of the crest is slid toward the left (i.e., toward the low-speed side shown by the arrow of the solid line). Therefore, the degree of a decrease in engine output can be determined from this amount of transformation.

Additionally, when the work load is changed, the light-load waveform shown by the dotted line is transformed so that the right slope of the crest is slid toward the right (i.e., toward the high-speed side shown by the arrow of the dotted line) with respect to the heavy-load waveform shown by the solid line, and hence the degree of the work load can be determined from this amount of transformation.

Next, effects obtained according to the embodiment mentioned above will be described.

As mentioned above, the dynamic state management controller 24, the management section 15, and the terminal equipment 17 and 19 are provided. The dynamic state management controller 24 creates frequency distribution information of a signal related to the output of the engine for each operation of the machine body 11 for a fixed time. The management section 15 receives and stores pieces of frequency distribution information. The terminal equipment 17 and 19 detect a decrease in engine output by arranging the pieces of frequency distribution information obtained from the management section 15 in time series and by comparing these pieces of information with each other. Therefore, the dynamic state management controller 24, the management section 15, and the terminal equipment 17 and 19 make it possible to provide a machine diagnosing system and a machine diagnosing method capable of detecting a decrease in engine output, without using threshold values, by comparison between the pieces of frequency distribution information stored concerning the output of the engine, unlike a case in which the abnormality/failure of the machine is determined by comparison with a conventional threshold value or in which the degree of such abnormality is ranked by comparison therewith.

Especially, data is automatically created by the special dynamic state management controller 24 mounted on the machine body 11 to form the work-machine remote operation management system 10, is then stored, and is transmitted to the management section 15. Therefore, information having higher objectivity and higher accuracy can be collected, and hence diagnosis accuracy can be increased.

Specifically, a decrease in engine output is detected by arranging pieces of frequency distribution information, which show a relationship between the size of a power shift pressure detected by the power shift pressure sensor 29ps and occurrence frequency, in time series and by comparing these pieces of information with each other. Therefore, a decrease in engine output can be easily detected by the frequency distribution information regarding the power shift pressure, which can be easily detected, without using threshold values.

Alternatively, a decrease in engine output is detected by arranging pieces of frequency distribution information, which show a relationship between the size of a boost pressure detected by the boost pressure sensor 30bs and occurrence frequency, in time series and by comparing these pieces of information with each other. Therefore, a decrease in engine output can be easily detected by the frequency distribution information regarding the boost pressure, which can be easily detected, without using threshold values.

Additionally, a decrease in engine output is detected by arranging pieces of frequency distribution information, which show a relationship between the size of the engine speed detected by the engine speed sensor 22r and occurrence frequency, in time series and by comparing these pieces of information with each other. Therefore, a decrease in engine output can be easily detected by the frequency distribution information regarding the engine speed, which can be easily detected, without using threshold values.

Moreover, if the amount of change caused when the output of the engine is reduced falls within a given range, a determination is made that a decrease in engine output has been caused by inferior fuel. If the amount of change caused when the output of the engine is reduced does not fall within the given range, a determination is made that a decrease in engine output has been caused by the failure of the engine 22. Therefore, proper dealing can be performed for the cause by which the output of the engine is reduced.

Specifically, a decrease in the output of the engine 22 seems to be brought about by two causes, i.e., by the abnormality (failure) of the engine 22 and use of inferior fuel. There is a difference in how to be changed when the output of the engine is reduced and in the amount of change between engine abnormality and use of inferior fuel. Therefore, these two causes can be distinguished from each other. Thus, a fall in performance caused by fuel to be used can be confirmed as well as a fall in engine performance caused by failure. Therefore, the present invention is also useful for the detection of illegal fuel use that is a problem in the engine coping with the third regulation.

Each of the above power shift pressure, the boost pressure, and the engine speed is shown as a signal concerning the output of the engine used for the machine diagnosing method according to the present invention. Instead, the amount of instantaneous fuel consumption (i.e., a fuel injection command value emitted from an engine controller) or a pump discharge pressure may be used as a piece of operating data that can be used when a decrease in engine output is detected by the work-machine remote operation management system 10.

### INDUSTRIAL APPLICABILITY

The present invention can be used for the work machine body 11, such as a hydraulic shovel, a bulldozer, or a loader, provided with the work-machine remote operation management system 10.

## Claims

1. A machine diagnosing method comprising:
allowing a dynamic state management controller, which is mounted on a machine and which has an operating data storage function and a radio communication function, to create frequency distribution information showing a relationship between intensity of a signal related to engine output of the machine and occurrence frequency whenever the machine is operated for a predetermined time;
allowing a management section to store pieces of frequency distribution information transmitted by means of the radio communication function of the dynamic state management controller; and
detecting a decrease in engine output by arranging the pieces of frequency distribution information in time series and by comparing these pieces of frequency distribution information with each other.

2. The machine diagnosing method of claim 1, wherein the signal related to engine output is a power shift pressure that acts on a regulator controlling a pump driven by the engine and that controls an output emitted from the pump.

3. The machine diagnosing method of claim 1, wherein the signal related to engine output is a boost pressure supercharged to an engine intake side by a turbo charger.

4. The machine diagnosing method of claim 1, wherein the signal related to engine output is an engine speed.

5. The machine diagnosing method of any one of claim 1 through claim 4, wherein a determination is made as to whether an amount of change caused when the output of the engine is reduced falls within a given range, and, if the amount of change falls within the given range, a determination is made that a decrease in engine output has been caused by inferior fuel, whereas, if the amount of change does not fall within the given range, a determination is made that a decrease in engine output has been caused by engine failure.

6. A machine diagnosing system comprising:
a dynamic state management controller that is mounted on a machine and that has an operating data storage function creating frequency distribution information that shows a relationship between signal intensity related to an output emitted from an engine of the machine and occurrence frequency whenever the machine is operated for a predetermined time and a radio communication function;
a management section that receives and stores pieces of frequency distribution information transmitted by the radio communication function of the dynamic state management controller; and
terminal equipment each of which detects a decrease in engine output by arranging the pieces of frequency distribution information obtained from the management section through a telecommunication line in time series and by comparing these pieces of frequency distribution information with each other.
